# EUROPEAN PATENT SPECIFICATION

(11) **EP 1 373 402 B1**
(45) Date of publication and mention of the grant of the patent: **25.05.2011**
(21) Application number: 02723712.2
(22) Date of filing: 28.03.2002
(51) Int. Cl.: C08L 23/08

(54) **SOFT AND RESILIENT ETHYLENE COPOLYMERS AND THEIR USE IN GOLF BALLS**
WEICHES, ELASTISCHES ETHYLENCOPOLYMERE UND DEREN BENÜTZUNG IN GOLFBÄLLEN
COPOLYMERES D'ETHYLENE SOUPLES ET ELASTIQUES ET LEUR UTILISATION DANS DES BALLES DE GOLF

(30) Priority: 29.03.2001 US 279622 P
(43) Date of publication of application: 02.01.2004
(73) Proprietor: E.I. DU PONT DE NEMOURS AND COMPANY, Wilmington, DE 19898 (US)
(72) Inventor: CHEN, John, Chu, Hockessin, DE 19707 (US)
(74) Representative: Morf, Jan Stefan
(86) International application number: PCT/US2002/010045
(87) International publication number: WO 2002/079319

(56) References cited:
- WO-A-01/29129
- WO-A-98/47957
- US-A- 6 100 321
- PATENT ABSTRACTS OF JAPAN vol. 2000, no. 09, 13 October 2000 (2000-10-13) & JP 2000 157646 A (BRIDGESTONE SPORTS CO LTD), 13 June 2000 (2000-06-13)

## Description

### BACKGROUND OF THE INVENTION

### Field of Invention

This invention relates to ionomer compositions that have a unique combination of high resilience and softness. It also relates to the use of such ionomers in golf ball components (e.g., covers, mantles, intermediate layers, core, and centers of golf balls with various constructions and 1-piece balls) and other industrial applications (e.g., thermoplastic shoe soles for cleated footwear, packaging films, molded parts, and resilient foams for sporting goods).

The ionomer compositions are melt-processible, partially, particularly highly-neutralized, copolymers of ethylene, C₃ to C₈ α,β ethylenically unsaturated carboxylic acid and softening co-monomer, the copolymers having a high melt index (MI), melt blended with aliphatic, mono-functional organic acid(s) having fewer than 36 carbon atoms or salts thereof wherein greater than 90% of the acid moieties in the blend are neutralized.

### Description of Related Art

Typical premium golf balls include three-piece balls, two-piece balls and multi-layered balls. "Three-piece" balls typically have a spherical molded center, elastomeric thread-like material wound around the center, and either a thermoplastic or thermoset cover. "Two-piece" balls typically have a spherical molded core covered with a thermoplastic material. "Multi-layered" balls typically have a spherical molded core and one or more intermediate layers or mantles between the core and a cover.

Centers of three-piece balls and cores of two-piece balls and multi-layer balls have traditionally been made using a thermoset rubber such as polybutadiene rubber. With thermoset rubber, complex multi-step processes are needed to make cores and centers and scrap cannot be recycled. Attempts to solve these difficulties by substituting a thermoplastic for the thermoset have had limited success. Also, attempts to make premium one-piece balls have been unsuccessful. See U.S. Patent No. 5,155,157, UK Patent Application 2,164,342A and WHO 92/12206. Balls, cores and centers made based on these references have a high cost and lack properties such as durability, softness (low Atti compression), and resilience to make them useful in premium balls.

One thermoplastic that has found utility in golf ball components and other applications for a long time are ionomers of copolymers of alpha olefins, particularly ethylene, and C₃₋₈ α,β ethylenically unsaturated carboxylic acid. U.S. Patent No. 3,264,272 (Rees) teaches methods for making such ionomers from "direct" acid copolymers. "Direct" copolymers are polymers polymerized by adding all monomers simultaneously, as distinct from a graft copolymer, where another monomer is grafted onto an existing polymer, often by a subsequent free radical reaction. A process for preparing the acid copolymers on which the ionomers are based is described in U.S. Patent No. 4,351,931.

The acid copolymers may contain a third "softening" monomer that disrupts the crystallinity of the polymer. These acid copolymers, when the alpha olefin is ethylene, can be described as an E/X/Y copolymers wherein E is ethylene, X is the α,β ethylenically unsaturated carboxylic acid, particularly acrylic and methacrylic acid, and Y is the softening co-monomer. Preferred softening co-monomers are C₁ to C₈ alkyl acrylate or methacrylate esters. X and Y can be present in a wide range of percentages, X typically up to about 35 weight percent (wt.%) of the polymer and Y typically up to about 50 weight percent of the polymer.

However, the "softer" ionomers based on the acid copolymers containing the "softening" monomer typically have lower than desired resilience for the golf ball applications. Therefore, the "softer" ionomers are almost always used in blends with other "stiff" ionomers to bring the resilience up to the acceptable range, which inevitably would raise the stiffness of the composition. The blending approach results in only a compromised property balance, e.g. intermediate stiffness and intermediate resilience, when applied to the golf ball applications. While the performance compromise from the blends met the near term performance needs, the need for further golf ball performance improvement, particularly simultaneously improved balance of softness and resilience, continues to be unattainable.

A wide range of cations is known for neutralizing acid moieties in the acid copolymer. The degree of neutralization is known to vary over a wide range. Typical cations include lithium, sodium, potassium, magnesium, calcium, barium, lead, tin, zinc, aluminum, and combinations of such cations. It has been reported for most ionomers that, when acid copolymers are neutralized into ionomers, the resilience improves as the degree of neutralization increases and peaks at around 50% neutralization. Further neutralization results in higher mechanical stiffness, high melt viscosity and little benefit in resilience improvement. Neutralization to 70% and higher, including up to 100%, is known, but such a high degree of neutralization results in a loss of melt-processibility or properties such as elongation and toughness. This is particularly so for copolymers with high acid levels.

### SUMMARY OF THE INVENTION

The present invention is an ionomer that has much enhanced resilience and higher softness (lower stiffness) and still maintains good melt processibility and overall mechanical properties. It is made by highly neutralizing an alpha olefin acid copolymer that has its crystallinity disrupted, particularly by inclusion of a softening monomer, and has a high MI. The unexpected combination of improved resilience and softness is believed to be the result of more disrupted crystallinity and much enhanced ionic crosslink through the molecular composition and structure and the network topology, which was attained without sacrificing the melt processibility.

The thermoplastic composition of this invention comprises a melt blend of (1) copolymer(s) of ethylene, C₃ to C₈ α,β ethylenically unsaturated carboxylic acid copolymer(s) and softening monomer with high MI, as described below and (2) 5 to 50 weight percent, based on total of (1) and (2) of one or more aliphatic, mono-functional saturated or unsaturated organic acid(s) or salts thereof having fewer than 36 carbon atoms, wherein greater than 90%, and more preferably 100% of all the acid of components (1) and (2) are neutralized. By modifying the compositions in this manner, it is possible to highly neutralize the acid copolymer to significantly enhance the resilience without losing processibility or properties such as elongation and toughness. The organic acids employed in the present invention are particularly those that are non-volatile and non-migratory.

Component (1) of the thermoplastic composition comprises partially, particularly highly, neutralized copolymer(s) of ethylene, C₃ to C₈ α,β ethylenically unsaturated carboxylic acid, and softening monomer, wherein the copolymer(s) have a sufficiently high MI (measured in accord with ASTM D-1238, condition E, at 190°C, using a 2160 gram weight, with values of MI reported in grams/10 minutes). That is, the MI of the base resin (copolymer(s) of ethylene, C₃ to C₈ α,β ethylenically unsaturated carboxylic acid, and softening monomer) should be sufficiently high so that when the base resin is highly neutralized (e.g., to at least 55%, preferably 70%, or 80%, of acid moiety), the resulting neutralized resin has an MI that is measurable in accord with ASTM D-1238, condition E, at 190°C, using a 2160 gram weight. Preferably this MI will be at least 0.4, preferably 0.7, and, more preferably 1.0 or greater. Preferably the MI of the base resin prior to neutralization is at least 100, and preferably at least 150. The copolymers are highly neutralized, preferably to at least 55%, at least 70%, and more preferably at least 80% of the acid moiety of the acid copolymer without resulting in an intractable (not melt processible) polymer that does not have useful physical properties. Preferably, the acid copolymer base resin is neutralized by one or more alkali metal, transition metal or alkaline earth metal cations.

The copolymer(s) of alpha olefin, C₃ to C₈ α,β ethylenically unsaturated carboxylic acid and softening monomer from which the melt processible ionomers described above are prepared can be made by methods known in the art. The copolymers include ethylene acid copolymers, particularly ethylene/(meth) acrylic acid/butyl (meth) acrylate copolymers.

### BRIEF DESCRIPTION OF FIGURE

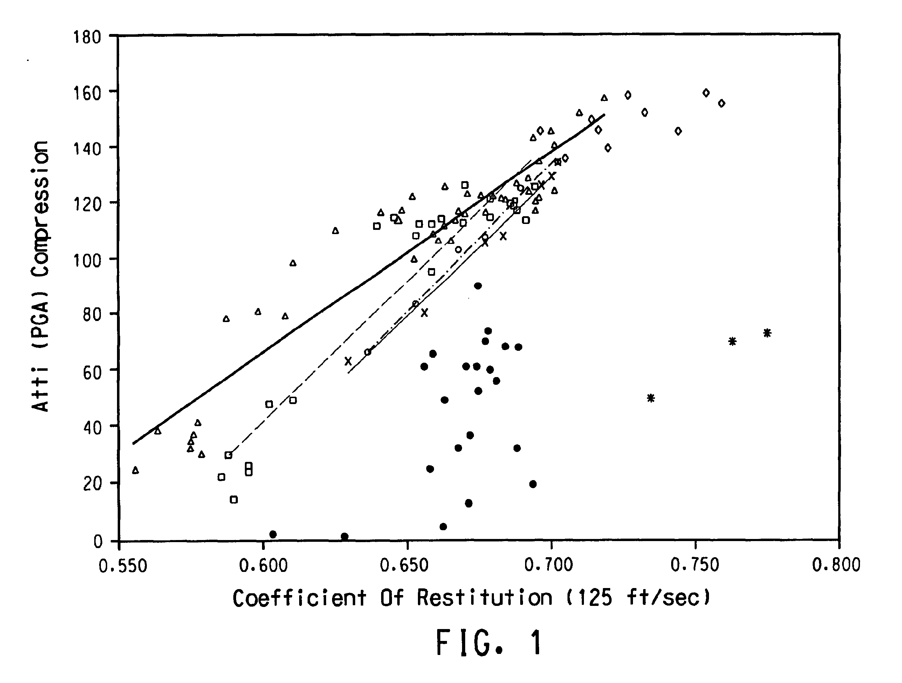

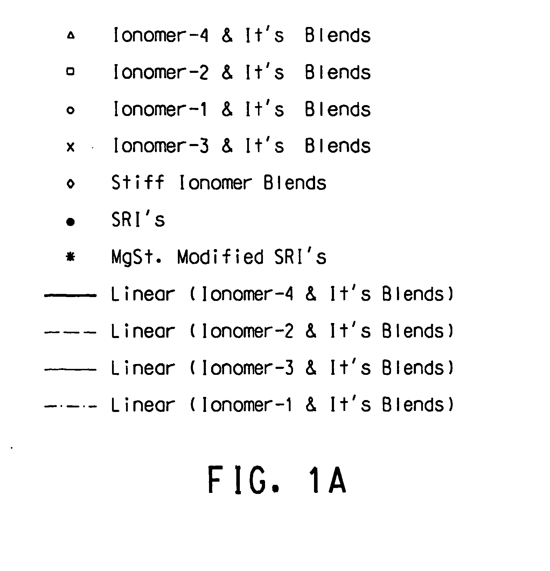

Figure 1 is a plot of Atti (PGA) compression versus Coefficient of Restitution (125 ft/sec initial velocity) showing the properties of molded spheres of resins of the present invention compared to other resins. Figure 1A is the key for the plot in Figure 1.

### DETAILED DESCRIPTION OF THE INVENTION

In this disclosure, the term "copolymer" is used to refer to polymers containing two or more monomers. The phrase "copolymer of various monomers" means a copolymer whose units are derived from the various monomers. "Consisting essentially of means that the recited components are essential, while smaller amounts of other components may be present to the extent that they do not detract from the operability of the present invention. The term "(meth) acrylic acid" means methacrylic acid and/or acrylic acid. Likewise, the term "(meth) acrylate" means methacrylate and/or acrylate.

### Soft, High Resilience Ionomer

The present invention is a composition comprising a partially, preferably highly, neutralized ethylene acid copolymer wherein its crystallinity is disrupted by inclusion of a softening monomer or other means. It has been found that by starting with high MI acid copolymers and neutralizing them to high degrees, it is possible to more effectively disrupt the crystallinity and enhance the ionic crosslink. The resulting ionomer achieves simultaneous enhancement of resilience and softness without compromising the melt processibility and the mechanical properties.

The present invention relates to a "modified" soft, resilient thermoplastic ionomer that comprises a melt blend of (a) acid copolymers having high MI or the melt processible ionomers made therefrom as described below and (b) 5 to 50 weight percent, based on total of (a) and (b) of non-volatile, non-migratory agents to substantially remove remaining ethylene crystallinity, wherein greater than 90% of all the acid of (a) and of (b) is neutralized. Preferably, nearly 100% of all the acid or 100% of all the acid of (a) and (b) is neutralized by a cation source. Preferably, an amount of cation source in excess of the amount required to neutralize 100% of the acid in (a) and (b) is used to neutralize the acid in (a) and (b). The non-volatile, non-migratory agents are one or more aliphatic, mono-functional organic acids or salts thereof as described below, particularly one or more aliphatic, mono-functional, saturated or unsaturated organic acids having less than 36 carbon atoms or salts of the organic acids, preferably stearic acid or oleic acid.

These ionomers are prepared by neutralizing acid copolymers as more fully described below under the heading "Acid Copolymers" by methods known in the art.

Component (a) of these soft, high resilient ionomers are compositions from neutralizing the acid copolymers of E/X/Y compositions, where E is ethylene, X is the α,β ethylenically unsaturated carboxylic acid, and Y is a softening comonomer. X is present in 4-20 (preferably 5-15) wt.% of the polymer, and Y is present in 20-40 (preferably 24-35) wt.% of the polymer, having a sufficiently high MI and a high degree of neutralization as both are defined below under the heading "Acid Copolymers" by methods, neutralization being by one or more alkali metal, transition metal or an alkaline earth metal cations.

Particular soft, resilient ionomers included in this invention are partially neutralized ethylene/(meth) acrylic acid /butyl (meth) acrylate copolymers (as component (a)) having an MI of at least 100 and any level of neutralization that does not result in an intractable (not melt processible) polymer that does not have useful physical properties. Preferably, neutralization is high. Particularly, at least 55%, at least 70%, or most preferably at least 80% of the acid moiety of the acid copolymer is neutralized by one or more alkali metal, transition metal, or alkaline earth metal cations.

Cations useful in making the ionomers of this invention are lithium, sodium, potassium, magnesium, calcium, barium, or zinc, or a combination of such cations.

Processes for such modifications are known in the art. Particularly, the modified highly-neutralized soft, resilient acid copolymer ionomers of this invention can be produced by
(a) melt-blending (1) ethylene, α,β ethylenically unsaturated C₃₋₈ carboxylic acid copolymer(s) or melt-processible ionomer(s) thereof that have their crystallinity disrupted by addition of a softening monomer or other means and that have a high MI with (2) sufficient non-volatile, non-migratory agents to substantially remove the remaining ethylene crystallinity, and then concurrently or subsequently
(b) Adding a sufficient amount of a cation source to increase the level of neutralization of all the acid moieties (including those in the acid copolymer and in the organic acid if the non-volatile, non-migratory agent is an organic acid) to greater than 90%, preferably near 100%, more preferably to 100%.

### Acid Copolymers

The acid copolymers used in the present invention to make the ionomers are preferably 'direct' acid copolymers (containing high levels of softening monomers) that have a high melt index (MI). In particular, the acid copolymers have high MI. That is, the MI of the acid copolymer should be sufficiently high so that when the acid copolymer is highly neutralized (e.g., to at least 55%, preferably 70%, or 80%, of acid moiety), the resulting neutralized resin has an MI is measurable in accord with ASTM D-1238, condition E, at 190°C, using a 2160 gram weight. Preferably this resulting MI will be at least 0.4, preferably 0.7, and more preferably 1.0 or greater. Preferably the MI of the acid copolymer base resin is at least 100, and more preferably at least 150. The copolymers are highly neutralized, preferably to at least 55%, preferably at least 70%, and most preferably at least 80% of the acid moiety of the acid copolymer is neutralized by one or more alkali metal, transition metal or alkaline earth metal cations without resulting in an intractable (not melt processible) polymer that does not have useful physical properties.

They are preferably copolymers of alpha olefin, particularly ethylene, C₃₋₈ α,β ethylenically unsaturated carboxylic acid, particularly acrylic and methacrylic acid, and softening monomers, selected from alkyl acrylate, and alkyl methacrylate, wherein the alkyl groups have from 1 - 8 carbon atoms, copolymers. By "softening", it is meant that the crystallinity is disrupted (the polymer is made less crystalline).

The acid copolymers, when the alpha olefin is ethylene, can be described as E/X/Y copolymers where E is ethylene, X is the α,β ethylenically unsaturated carboxylic acid, and Y is a softening comonomer. X is present in 4-20 (preferably 5-15) wt.% of the polymer, and Y is present in 20-40 (preferably 24-35) wt.% of the polymer.

The ethylene-acid copolymers with high levels of acid (X) are difficult to prepare in continuous polymerizers because of monomer-polymer phase separation. This difficulty can be avoided however by use of "co-solvent technology" as described in U.S. Patent No. 5,028,674 or by employing somewhat higher pressures than those at which copolymers with lower acid can be prepared.

Specific acid-copolymers include ethylene/ (meth) acrylic acid/n-butyl (meth) acrylate, ethylene/ (meth) acrylic acid/iso-butyl (meth) acrylate, ethylene/ (meth) acrylic acid/methyl (meth) acrylate, and ethylene/ (meth) acrylic acid/ethyl (meth) acrylate terpolymers.

### Organic acids and Salts

The organic acids employed in the present invention are aliphatic, mono-functional (saturated, unsaturated, or multi-unsaturated) organic acids, particularly those having fewer than 36 carbon atoms. Also salts of these organic acids may be employed. The salts may be any of a wide variety, particularly including the barium, lithium, sodium, zinc, bismuth, potassium, strontium, magnesium or calcium salts of the organic acids. Particular organic acids useful in the present invention include caproic acid, caprylic acid, capric acid, lauric acid, stearic acid, behenic acid, erucic acid, oleic acid, and linoelic acid.

### Filler

The optional filler component of the subject invention is chosen to impart additional density to blends of the previously described components, the selection being dependent upon the different parts (e.g., cover, mantle, core, center, intermediate layers in a multilayered core or ball) and the type of golf ball desired (e.g., one-piece, two-piece, three-piece or multiple-piece ball), as will be more fully detailed below. Generally, the filler will be inorganic having a density greater than about 4 grams/cubic centimeter (gm/cc), preferably greater than 5 gm/cc, and will be present in amounts between 0 and 60 wt.% based on the total weight of the composition. Examples of useful fillers include zinc oxide, barium sulfate, lead silicate and tungsten carbide, as well as the other well known fillers used in golf balls. It is preferred that the filler materials be non-reactive or almost non-reactive and not stiffen or raise the compression nor reduce the coefficient of restitution significantly.

### Other components

Additional optional additives useful in the practice of the subject invention include acid copolymer wax (e.g., Allied wax AC143 believed to be an methylene/16-18% acrylic acid copolymer with a number average molecular weight of 2,040) which assist in preventing reaction between the filler materials (e.g., ZnO) and the acid moiety in the ethylene copolymer. Other optional additives include TiO₂, which is used as a whitening agent; optical brighteners; surfactants; processing aids.

### Selection of Materials for Golf Balls

The specific combinations of resilience and compression used in the practice of the subject invention will in large part be dependent upon the type of golf ball desired (e.g., one-piece, two-piece, three-piece, or multi-layered), and in the type of performance desired for the resulting golf ball as detailed below.

### Covers

Covers for golf balls comprising the soft, high resilient ionomer described above or its blends with other ionomers or non-ionomeric thermoplastic resins are included in the invention. The covers can be made by injection or compression molding the soft, high resilient ionomer described above (with or without organic acid or filler, other components, and other thermoplastics including other ionomers) over a thermoplastic or thermoset core of a two-piece golf ball, over windings around a thermoplastic or thermoset center, or as the outer layer of a multi-layer golf ball.

### Multi-Layer golf ball preferred embodiments

Multi-layer balls are manufactured by well-known techniques wherein an injection or compression molded core is covered by one or more intermediate layers or mantles and an outer cover by injection or compression molding. The core and/or the mantle(s) are made by injection or compression molding a sphere or layer of desired size or thickness from the soft, high resilient ionomer described above or its blends with other ionomers or non-ionomeric thermoplastic resins that is filled with sufficient filler to provide a golf ball meeting the weight limits (45 grams) set by the PGA. The amount of filler employed in the core and mantle(s) can be varied from 0 to 60 wt.% depending on the size (thickness) of the components and the desired location of the weight in the ball, provided that the final ball meets the required weight limits. The filler can be used in the core and not in the mantle, in the mantle and not in the core, or in both. While not intending to be limiting as to possible combinations, this embodiment includes:
1. a core comprising the same composition used in the three-piece center with a mantle made of any composition known in the art,
2. a core comprising the same composition used in the two-piece core or three-piece center with a mantle made of the composition of this invention with or without filler adjusted to provide a golf ball of the desired weight,
3. a core made of any composition (including thermoset compositions such as polybutadiene rubber) with a mantle made of the composition of this invention with or without filler provided that the weight of the finished golf ball meets the required limit.

### Two-piece golf ball preferred embodiments

Two-piece balls are manufactured by well-known techniques wherein covers are injection or compression molded over cores. For purposes of this invention, such cores are made by injection or compression molding a sphere of desired size from the soft, high resilient ionomer described above or its blends with other ionomers or non-ionomeric thermoplastic resins that is filled with sufficient filler to provide a core density of from 1.14 gm/cc to 1.2 gm/cc depending on the diameter of the core and the thickness and composition of the cover to produce a golf ball meeting the weight limits (45 grams) set by the PGA.

### Three-piece golf ball preferred embodiments

Three-piece balls are manufactured by well known techniques as described in, e.g., U.S. 4,846,910. For purposes of this invention, the center of these three-piece balls is made by injection or compression molding a sphere of desired size from the soft, high resilient ionomer described above or its blends with other ionomers or non-ionomeric thermoplastic resins that is filled with sufficient filler to provide a center density of from 1.6 gm/cc to 1.9 gm/cc depending on the diameter of the center, the windings, and the thickness and composition of the cover to produce a golf ball meeting the weight limits (45 grams) set by the PGA.

### One-piece golf ball preferred embodiments

One-piece balls can be made by well-known injection or compression techniques. They will have a traditional dimple pattern and may be coated with a urethane lacquer or be painted for appearance purposes, but such a coating and/or painting will not affect the performance characteristics of the ball.

The one-piece ball of this invention is made by injection or compression molding a sphere of desired size from the soft, high resilient ionomer described above or its blends with other ionomers or non-ionomeric thermoplastic resins that is filled with sufficient filler to provide a golf ball meeting the weight limits (45 grams) set by the PGA. Preferably, enough filler is used so that the ball has a density 1.14 gm/cc.

### EXAMPLES

### Testing Criteria for Examples

Coefficient of Restitution (COR) is measured by firing an injection-molded neat sphere of the resin having the size of a golf ball from an air cannon at a velocity determined by the air pressure. The initial velocity generally employed is 38.1 m/second (125 feet/second). The sphere strikes a steel plate positioned three feet away from the point where initial velocity is determined, and rebounds through a speed-monitoring device located at the same point as the initial velocity measurement. The return velocity divided by the initial velocity is the COR.

PGA Compression is defined as the resistance to deformation of a golf ball, measured using an Atti machine.

Melt Index (MI) was measured in accord with ASTM D-1238, condition E, at 190°C, using a 2160 gram weight, with values of MI reported in grams/10 minutes.

### Example Processes

Employing a Werner & Pfleiderer (W&P) twin screw extruder, the stoichiometric amount of magnesium hydroxide in the form of concentrate needed to neutralize the target amount of acid in the acid copolymer (Target % Neut.) was pre-blended with the acid copolymer as a pellet blend. The pellet blend was melt mixed and neutralized in the W&P twin screws extruder under the conditions described in Table I and in the presence of added H₂O. Examples 1 through 11 and 14 through 22 in Table II are thus prepared in the twin screw extrusion neutralization process. For Examples 15, 16, 18, 19, and 20, the resin was partially neutralized on a first pass through the extruder and then, to lower the M1, was passed through the extruder several additional times with more than the stoichiometric amount of Mg(OH)₂ needed to obtain greater than 100% neutralization on each pass, but otherwise the same operating conditions.

The same neutralization process was employed for the Na or Li ionomers (Example 12 and 13 in Table II) using the stoichiometric amount of the sodium carbonate or lithium hydroxide in the concentrate form needed to reach target percent neutralization pre-blended with the acid copolymer base resin, followed by the melt mixing and neutralization through the W&P twin screw extruder under the same process conditions.

Example 23 in Table III was prepared by melt blending the already partially neutralized acid copolymer described above with 15% weight percent of magnesium stearate in a W&P twin screws extruder. Example 24 and 25 in Table III were prepared by melt blending the unneutralized acid copolymers described above with 40% weight percent of magnesium stearate and the Mg(OH)₂ neutralizing agent to achieve 100% neutralization in a W&P twin screws extruder under the same process conditions.

**Table I: Extrusion Conditions for Preparing Ionomers**

| Screw Speed | Zone 1 | Zone 2-3 | Zone 4-9 | Die | Rate Kg/hr | Vac. cm |
|---|---|---|---|---|---|---|
| Rpm | Temp °C | Temp °C | Temp °C | Temp °C | (lb./hr) | (inches) |
| 100-300 | 75-100 | 125-160 | 140-260 | 200-230 | 2.265-11.325 (5-25) | 63.5 (28) |

**Table II: Soft and Resilient Ionomer Examples**

| **Ex. #** | **Resin Composition** | **Cation Type** | **Target % Neut.** | **Ionomer MI (g/10min.)** |
|---|---|---|---|---|
| 1 | E/23.2nBA/8.6MAA/206MI | Mg | 85 | 2.1 |
| 2 | E/20.7nBA/8.7MAA/206MI | Mg | 95 | 1.1 |
| 3 | E/17.2nBA/9MAA/203MI | Mg | 75 | 1.1 |
| 4 | E/23.3nBA/8.5MAA/200MI | Mg | 78 | 0.7 |
| 5 | E/24.3nBA/9.3MAA/115MI | Mg | 65 | 1.1 |
| 6 | E/24.2nBA/9.3MAA/78MI | Mg | 55 | 1 |
| 7 | E/20.0nBA/9.5MAA/204MI | Mg | 70 | 3.4 |
| 8 | E/20.0nBA/9.5MAA/204MI | Mg | 75 | 0.4 |
| 9 | E/21.2nBA/9.1AA/114MI | Mg | 55 | 1.4 |
| 10 | E/21.3nBA/8.7AA/195MI | Mg | 65 | 1.6 |
| 11 | E/23.5nBA/9MAA/190MI | Mg | 78 | 1 |
| 12 | E/23.5nBA/9MAA/190MI | Na | 78 | 2.5 |
| 13 | E/23.5nBA/9MAA/190MI | Li | 78 | 2.3 |
| 14 | E/25.6nBA/5MAA/207MI | Mg | 85 | 3.2 |
| 15 | E/26.5nBA/2.4MAA/208MI | Mg | 100 | 22.5 |
| 16 | E/26.8nBA/5.2MAA/190MI | Mg | 100 | 5.1 |
| 17 | E/26nBA/9MAA/195MI | Mg | 85 | 4.1 |
| 18 | E/29.2nBA/5.3MAA/205MI | Mg | 100 | 6.1 |
| 19 | E/27.6nBA/2.4AA/190MI | Mg | 100 | 20.4 |
| 20 | E/26.6nBA/4.9AA/195MI | Mg | 100 | 4 |
| 21 | E/26.8nBA/8.4AA/185MI | Mg | 70 | 2.1 |
| 22 | E/29.6nBA/5.1AA/208MI | Mg | 80 | 2.1 |

**Table III: Soft and Resilient Ionomer Composition Containing Mg Stearate**

| **Ex. #** | **Resin Composition** | **Cation Type** | **Target % Neut.** | **% Mg Stearate** | **MI (g/10min.)** |
|---|---|---|---|---|---|
| 23 | E/23.2nBA/8.6MAA/206MI | Mg | 86 | 15 | 0.7 |
| 24 | E/29.6nBA/5.1AA/208MI | Mg | ∼100 | 40 | 3.4 |
| 25 | E/26.8nBA/5.2MAA/190MI | Mg | ∼100 | 40 | 3.7 |

### Thermoplastic Spheres

The above example resins were injection molded into 3.89 cm (1.53 inch) diameter spheres for property testing using injection molding conditions described in Table IV. The molded spheres are tested for the golf ball properties after 2 weeks of annealing at room temperature and the data reported in Table V.

**Table IV: Molding Conditions for Injection Molding Spheres**

| | Temp. °C |
|---|---|
| Rear | 183 |
| Center | 173 |
| Front | 173 |
| Nozzle | 177 |
| Mold Front/Back | 10 |
| Melt | 195 |
| | |

| | Pressures (Kg/cm²) |
|---|---|
| Injection Ist Stage | 130 |
| Injection 2nd Stage | 110 |
| Injection Hold | 13 |
| | |

| | Cycle Times (sec) |
|---|---|
| Pack | 10 |
| Hold | 480 |
| Booster | 10 |
| Cure Time | 15 |
| Screw Retraction | 5.35 |

**Table V: Property of Molded Spheres**

| **Ex. #** | **Designation** | **PGA (ATTI) Compression** | **COR at 38.1 m/sec.** (**125 ft/sec**). |
|---|---|---|---|
| 1 | -- | 56 | 0.681 |
| 2 | -- | 72 | 0.678 |
| 3 | -- | 89 | 0.675 |
| 4 | -- | 60 | 0.678 |
| 5 | -- | 52 | 0.675 |
| 6 | -- | 49 | 0.663 |
| 7 | -- | 69 | 0.677 |
| 8 | -- | 68 | 0.684 |
| 9 | -- | 61 | 0.674 |
| 10 | -- | 68 | 0.689 |
| 11 | -- | 61 | 0.671 |
| 12 | -- | 61 | 0.656 |
| 13 | -- | 66 | 0.66 |
| 14 | -- | 30 | 0.668 |
| 15 | -- | 2 | 0.604 |
| 16 | -- | 14 | 0.671 |
| 17 | -- | 35 | 0.672 |
| 18 | -- | 5 | 0.663 |
| 19 | -- | 1 | 0.631 |
| 20 | -- | 19 | 0.692 |
| 21 | -- | 31 | 0.686 |
| 22 | -- | 24 | 0.658 |
| 23 | -- | 50 | 0.735 |
| 24 | -- | 73 | 0.774 |
| 25 | -- | 69 | 0.762 |
| Comp. #26 | Ionomer-1 | 64 | 0.632 |
| Comp. #27 | Ionomer-2 | 39 | 0.582 |
| Comp. #28 | Ionomer-3 | 66 | 0.627 |
| Comp. #29 | Ionomer-4 | 34 | 0.575 |
| Comp. #30 | Ionomer-5 | 124 | 0.671 |
| Comp. #31 | Ionomer-6 | 106 | 0.694 |
| Comp. #32 | Ionomer-7 | 108 | 0.673 |

| | | | |
|---|---|---|---|
| Ionomer-1: E/23.5nBA/9MAA/25MI; Mg neutralized to 51% and 0.95MI Ionomer-2: E/23.5nBA/9MAA/25MI; Na neutralized to 52% and 1.0MI Ionomer-3: E/23.5nBA/9MAA/25MI; Li neutralized to 47% and app. 1.0MI Ionomer-4: E/23.5nBA/9MAA/25MI; Zn neutralized, to 51% and 0.75MI Ionomer-5: 50/50 blend of Ionomer-1 and a 37% Na neutralized, 2.6MI E/19MAA/60MI Ionomer Ionomer-6: E/15.2nBA/8.78AA/61.4MI; Mg neutralized to 78% and 0.8MI Ionomer-7: E/15.2nBA/8.78AA/61.4MI; Mg neutralized to 65% and 1.9MI | | | |

The examples demonstrate significantly enhanced property balance between resilience (higher COR at 38.1 m/second (125 ft/second)) and softness (lower PGA compression) in reference to the current ionomers from the conventional art. It is particularly worth noting that this invention has enabled significantly improved resilience with lower stiffness for the magnesium ionomers when compared to the blended composition (comparative example 30) from the conventional art. The Na or Li ionomers exhibited significant resilience enhancement comparing to Ionomer-2 and Ionomer-3 from the conventional art. The composition of the soft and resilient ionomers containing magnesium stearate showed a dramatic increase in resilience and still maintain very low stiffness.

The soft and resilient ionomer compositions could be further modified with other ionomers and thermoplastic elastomers for property modifications, inorganic fillers for specific gravity adjustment, processing aids and stabilizers for processing and stability enhancement to be used for various parts of golf balls.

As can be seen from Figure 1 (see Figure 1A for key to data in Figure 1), the spheres made using the soft, resilient ionomer resins (SRI resins) of Examples 1-25 have higher COR's or lower PGA compression's than spheres made from the conventional "soft ionomers," Ionomer-1, Ionomer-2, Ionomer-3, and Ionomer-4, (data points in each set in the lower left area of the plot). Ionomer-1, Ionomer-2, Ionomer-3, and Ionomer-4 have compositions as reported above in Table V. Typically, to increase COR, "stiff or hard ionomers" (partially neutralized ethylene, C₃₋₈ α,β ethylenically unsaturated carboxylic acid copolymers without softening monomer) are added to the "soft ionomers." Each set of data for Ionomer-1, Ionomer-2, Ionomer-3, and Ionomer-4 in the Figure 1 represents blends of the "soft ionomers" with various amounts of various "stiff ionomers." As can be seen from the Figure 1, the data points for the SRI spheres (not blended with "stiff ionomers" fall below the linear plots of the data for each of the "soft ionomers" blends. Put another way, Atti (PGA) Compressions for the SRI resins are lower than those for "soft ionomers" blended with "stiff ionomer" to raise the COR to the level achieved by the SRI without "stiff ionomer."

## Claims

1. A composition comprising a thermoplastic composition that is melt processible consisting essentially of (a) a thermoplastic composition comprising E/X/Y copolymers where E is ethylene, X is a C₃ to C₈ α,β ethylenically unsaturated carboxylic acid, and Y is a softening comonomer selected from alkyl acrylate and alkyl methacrylate wherein the alkyl groups have from 1 - 8 carbon atoms, wherein
a. the E/X/Y copolymer prior to neutralization has a melt index measured in accord with ASTM D-1238, condition E, at 190 °C using a 2160 gram weight of at least 100 grams per ten minutes,
b. X is 4 - 20 wt.% of the E/X/Y copolymer and Y being 20 - 40 wt.% of the E/X/Y copolymer, and
c. at least 55% of X is neutralized by one or more alkali metal, transition metal, or alkaline earth metal cations,
and (b) 5 to 50 weight percent based on total of (a) and (b) of one or more aliphatic, mono-functional organic acids having fewer than 36 carbon atoms or salt thereof, wherein greater than 90% of all the acid of (a) and of (b) is neutralized by one or more alkali metal, transition metal, or alkaline earth metal cations.

2. The composition of claim 1 wherein X is 5-15 wt.% of the E/X/Y copolymer, Y is 24-35 wt.% of the E/X/Y copolymer, the melt index of the E/X/Y copolymer is at least 150 grams per ten minutes, and at least 70% of X is neutralized.

3. The composition of claim 2 wherein X is methacrylic acid or acrylic acid.

4. The composition of claim 1 wherein at least 80% of X is neutralized.

5. The composition of claim 1 wherein the acid of (a) and (b) is neutralized with a sufficient amount of one or more alkali metal, transition metal, or alkaline earth metal cation source to neutralize at least 100% of all the acid of (a) and of (b).

6. The cover of a golf ball comprising the composition of claim 1.

7. The core of a two-piece golf ball comprising the composition of claim 1.

8. The center of a three-piece golf ball comprising the composition of claim 1.

9. The core, mantle, or one or more intermediate layers of a multi-layered golf ball comprising the composition of claim 1.

10. A one-piece golf ball comprising the composition of claim 1.

## Patentansprüche

1. Zusammensetzung umfassend eine thermoplastische Zusammensetzung, die schmelzverarbeitbar ist und im Wesentlichen aus Folgendem besteht (a) einer thermoplastischen Zusammensetzung umfassend E/X/Y-Copolymere, wobei E Ethylen ist, X eine α,β-ethylenisch ungesättigte C₃-C₈-Carbonsäure ist und Y ein Erweichungscomonomer ausgewählt unter Alkylacrylat und Alkylmethacrylat ist, wobei die Alkylgruppen 1-8 Kohlenstoffatome aufweisen, wobei
a. das E/X/Y-Copolymer vor dem Neutralisieren einen Schmelzindex von mindestens 100 Gramm pro zehn Minuten, ASTM D-1238, Bedingung E entsprechend bei 190 °C mit Hilfe eines Gewichts von 2160 Gramm gemessen, aufweist,
b. X 4-20 Gew.-% des E/X/Y-Copolymers ausmacht und Y 20-40 Gew.-% des E/X/Y-Copolymers ausmacht und
c. mindestens 55 % von X durch ein oder mehrere Alkalimetall-, Übergangsmetall- oder Erdalkalimetallkationen neutralisiert sind,
und (b) 5 bis 50 Gewichtsprozent, auf (a) und (b) insgesamt bezogen, einer oder mehrerer aliphatischer, monofunktioneller organischer Säuren, die weniger als 36 Kohlenstoffatome aufweisen, oder eines Salzes derselben, wobei mehr als 90 % der gesamten Säure von (a) und (b) durch ein oder mehrere Alkalimetall-, Übergangsmetall- oder Erdalkalimetallkationen neutralisiert sind.

2. Zusammensetzung nach Anspruch 1, wobei X 5-15 Gew.% des E/X/Y-Copolymers ausmacht, Y 24-35 Gew.-% des E/X/Y-Copolymers ausmacht, der Schmelzindex des E/X/Y-Copolymers mindestens 150 Gramm pro zehn Minuten beträgt und mindestens 70 % von X neutralisiert sind.

3. Zusammensetzung nach Anspruch 2, wobei X Methacrylsäure oder Acrylsäure ist.

4. Zusammensetzung nach Anspruch 1, wobei mindestens 80 % von X neutralisiert sind.

5. Zusammensetzung nach Anspruch 1, wobei die Säure von (a) und (b) mit einer ausreichenden Menge einer oder mehrerer Quellen von Alkalimetall-, Übergangsmetall- oder Erdalalkalimetallkationen neutralisiert wird, um mindestens 100 % der gesamten Säure von (a) und von (b) zu neutralisieren.

6. Hülle eines Golfballs umfassend die Zusammensetzung nach Anspruch 1.

7. Kern eines zweiteiligen Golfballs, umfassend die Zusammensetzung nach Anspruch 1.

8. Mittelstück eines dreiteiligen Golfballs, umfassend die Zusammensetzung nach Anspruch 1.

9. Kern, Mantel oder eine oder mehrere Zwischenschichten eines mehrschichtigen Golfballs, umfassend die Zusammensetzung nach Anspruch 1.

10. Einstückiger Golfball umfassend die Zusammensetzung nach Anspruch 1.

## Revendications

1. Composition comprenant une composition thermoplastique qui peut être mise en oeuvre à l'état fondu constituée essentiellement (a) d'une composition thermoplastique comprenant des copolymères E/X/Y où E est de l'éthylène, X est un acide carboxylique α,β-éthyléniquement insaturé C₃ à C₈ et Y est un co-monomère amollissant choisi parmi un acrylate d'alkyle et un méthacrylate d'alkyle, où les groupes alkyles possèdent 1-8 atomes de carbone, dans laquelle:
a. le copolymère E/X/Y avant neutralisation présente un indice de fluidité à chaud, mesuré en accord avec la norme ASTM D-1238, condition E, à 190°C en utilisant un poids de 2160 grammes, d'au moins 100 grammes par dix minutes
b. X constitue 4-20% en poids du copolymère E/X/Y et Y constituant 20-40% en poids du copolymère E/X/Y; et
c. au moins 55% de X est neutralisé par un ou plusieurs cations de métal alcalin, de métal de transition ou de métal alcalino-terreux,
et (b) de 5 à 50 pour-cent en poids sur la base du total de (a) et de (b) d'un ou de plusieurs acides organiques aliphatiques, mono-fonctionnels possédant moins de 36 atomes de carbone ou d'un sel de ceux-ci, où plus de 90% de la totalité d'acide de (a) et de (b) est neutralisé par un ou plusieurs cations de métal alcalin, de métal de transition ou de métal alcalino-terreux.

2. Composition selon la revendication 1, dans laquelle X constitue 5-15% en poids du copolymère E/X/Y, Y constitue 24-35% en poids du copolymère E/X/Y, l'indice de fluidité à chaud du copolymère E/X/Y est d'au moins 150 grammes par dix minutes et au moins 70% de X est neutralisé.

3. Composition selon la revendication 2, dans laquelle X est de l'acide méthacrylique ou de l'acide acrylique.

4. Composition selon la revendication 1, dans laquelle au moins 80% de X est neutralisé.

5. Composition selon la revendication 1, dans laquelle l'acide de (a) et de (b) est neutralisé avec une quantité suffisante d'une ou de plusieurs sources de cations de métal alcalin, de métal de transition ou de métal alcalino-terreux pour neutraliser au moins 100% de la totalité d'acide de (a) et de (b).

6. Revêtement d'une balle de golf comprenant la composition selon la revendication 1.

7. Noyau d'une balle de golf en deux morceaux comprenant la composition selon la revendication 1.

8. Centre d'une balle de golf en trois morceaux comprenant la composition selon la revendication 1.

9. Coeur, enveloppe ou une ou plusieurs couches intermédiaires d'une balle de golf à couches multiples comprenant la composition selon la revendication 1.

10. Balle de golf en un morceau comprenant la composition selon la revendication 1.
